# EUROPÄISCHE PATENTANMELDUNG

(11) **EP 0 788 964 A2**
(43) Veröffentlichungstag der Anmeldung: **13.08.1997**
(21) Anmeldenummer: 96114411.0
(22) Anmeldetag: 09.09.1996
(51) Int. Cl.: B62D 6/00

(54) **Servolenkeinrichtung für ein Kraftfahrzeug**

(30) Priorität: 29.09.1995 DE 19536492
(71) Anmelder: SIEMENS AKTIENGESELLSCHAFT, 80333 München (DE)
(72) Erfinder: Probst, Gregor, 84028 Landshut (DE); Brandmeier, Thomas, Dr., 93051 Regensburg (DE); Hackl, Stefan, 92421 Schwandorf (DE); Schilling, Detlef, 07749 Jena (DE)

(57) **Zusammenfassung**

Eine Servolenkeinrichtung für ein Kraftfahrzeug weist einen elektrischen Motor 9, einen Lenkmomentsensor 13 und eine Steuerung 14 auf, durch welche abhängig von dem Lenkmoment ein Solldrehmoment berechnet und als Steuersignal an den Motor 9 übermittelt wird. In einer Klassifikationsschaltung 24, 25, 26 werden Klassifikationssignale kr, ks, kf erzeugt, die Betriebsgrößen des Kraftfahrzeugs charakterisieren. Diese Klassifikationssignale werden einem Regler 18 zugeführt und von diesem bei der Regelung des Solldrehmoments M_{Motor} berücksichtigt. Klassifiziert werden dabei der Fahrstil des Fahrers, der Radkraftschlußbeiwert und der Straßentyp. Der Regler 18 regelt den Motorstrom I_{Motor} des Motors 9.

## Beschreibung

Die Erfindung betrifft eine Servolenkeinrichtung nach dem Oberbegriff von Patentanspruch 1.

Servolenkungen - auch als Lenkhilfen oder Hilfskraftlenkungen bezeichnet - erleichtern dem Fahrer das Bedienen eines Kraftfahrzeugs, da sie die zum Einschlagen der Räder erforderlichen Lenkkräfte herabsetzen, ohne die Zahl der dabei erforderlichen Lenkradumdrehungen zu erhöhen. Durch einen Zusatzantrieb wird das Lenkmoment verstärkt, wobei diese Verstärkung in der Regel abhängig von der Fahrzeuggeschwindigkeit ist: bei langsamer Fahrt ist sie groß, bei schneller Fahrt sinkt sie merklich ab.

Eine bekannte Servolenkeinrichtung weist einen Elektromotor, eine elektrische Steuerung und einen Lenksensor auf, der je nach Lenkrichtung positive oder negative Signale erzeugt, die in der Steuerung zu einem Ausgangssignal des Elektromotors umgeformt werden (DE-A 40 12 934). Durch Verändern eines Steuerstroms kann das Ausgangssignal und damit die Kennlinie der Stellkraft des Motors - abhängig von Parametern wie die Fahrzeuggeschwindigkeit oder -beschleunigung und des Lenkeinschlagwinkels - verändert werden. Eine Anpassung an den Fahrstil des Fahrers und die Fahrstrecke ist nicht möglich.

Der Erfindung liegt die Aufgabe zugrunde, eine Servolenkung zu schaffen, die in der Lage ist, das Lenkmoment fahreradaptiv zu verstärken. Auch die Art der jeweils befahrenen Straße, z.B. innerörtliche Straße, Landstraße oder Autobahn, ist beim Dosieren der von der Fahrzeuggeschwindigkeit abhängigen Lenkradunterstützung zu berücksichtigen.

Diese Aufgabe wird erfindungsgemäß durch die Servolenkeinrichtung nach Anspruch 1 gelöst. Zweckmäßige Weiterbildungen der Erfindung sind in den Unteransprüchen niedergelegt.

Ein Ausführungsbeispiel der Erfindung wird im folgenden anhand der Zeichnung erläutert. Es zeigen:
- Figur 1: eine mit einer erfindungsgemäßen Servolenkung versehene Kraftfahrzeuglenkung, in schematischer Darstellung;
- Figur 2: die Servolenkung nach Figur 1 als Blockdiagramm dargestellt;
- Figur 3: die Elemente eines Reglers, der Bestandteil der Servolenkung nach Figur 2 ist, und
- Figur 4: den Verlauf des Motormoments der erfindungsgemäßen Servolenkung über der Zeit.

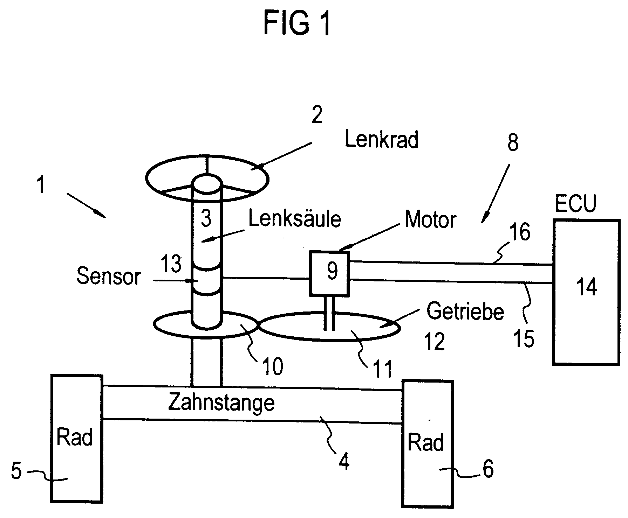

Eine Lenkung 1 eines Kraftfahrzeugs besteht im wesentlichen aus einem Lenkrad 2, einer Lenksäule 3, einer Zahnstange 4 und zwei gelenkten Rädern 5 und 6 (Figur 1). Weitere Einzelheiten der Lenkung, wie ein die Lenksäule mit der Zahnstange verbindendes Lenkgetriebe, Spurstangen, Spurstangengelenke usw. sind hier nicht dargestellt, da sie allgemein bekannt sind und von der Erfindung nicht berührt werden.

Eine Servolenkung 8 besteht im wesentlichen aus einem Elektromotor 9 und einem aus zwei Zahnrädern 10 und 11 bestehendes Getriebe 12, das die Drehbewegung des Motors 9 untersetzt und auf die Lenksäule 3 überträgt. Ein in die Lenksäule integrierter Sensor 13 liefert den Istwert des Lenkdrehmoments oder Lenkmoments an eine elektronische Steuerung 14 für die Servolenkung 8. Die Steuerung 14, die anhand der nachfolgenden Figuren erläutert wird, empfängt die Sensorsignale über eine Leitung 15 und gibt über eine Leitung 16 Steuersignale an den Elektromotor 9.

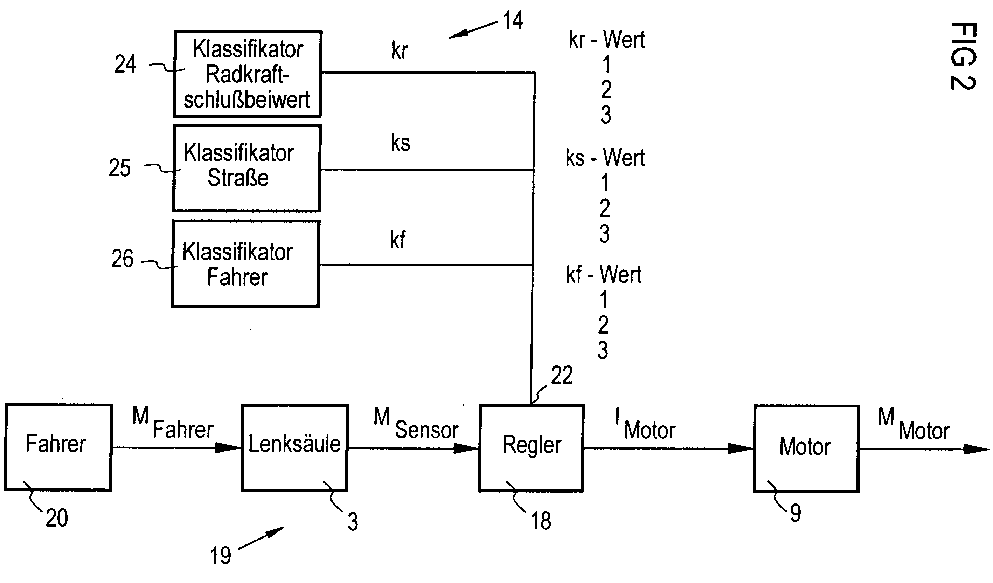

Das von dem Motor 9 erzeugte und über das Getriebe 12 auf die Lenkung übertragene Drehmoment wird über eine Stromregelung gesteuert. Ein in der Steuerung 14 enthaltener Regler 18 (Figur 2) erzeugt einen Stromsollwert, mit dem das gewünschte Lenkmoment an dem Motor 9 eingestellt wird.

Der Regler 18 ist Bestandteil einer Servolenkung-Wirkungskette 19: ein Fahrer, hier als Block 20 dargestellt, übt über das Lenkrad auf die Lenksäule 3 ein Lenkmoment M_{Fahrer} aus. An der Lenksäule 3 erfaßt der Sensor 13 das Drehmoment M_{Sensor} und übermittelt es an den Regler 18.

In dem Regler 18 wird anhand des Drehmomentwertes und noch zu beschreibender Klassifikator-Signale ein Stromsollwert I_{Motor} ermittelt und auf den Motor 9 gegeben. Dieser erzeugt ein Servodrehmoment M_{Motor}, das über das Getriebe 12 auf die Zahnstange 4 des Lenkgetriebes einwirkt und über die Räder auf die Straße Übertragen wird. An dem Lenkrad 2 tritt ein Reaktionsmoment auf, das ein Maß für den Istwert des Lenkmoments ist. Dieser Istwert wird mit dem Sollwert des Lenkmoments verglichen und ergibt eine von dem Fahrer wahrgenommene 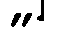 Regeldifferenz", mit der sich ein virtueller Regelkreis schließt.

Mit einem Signaleingang 22 des Reglers 18 sind drei Klassifikationsschaltungen oder Klassifikatoren verbunden: ein Klassifikator 24 für den Radkraftschlußbeiwert kr, ein Klassifikator 25 für den Straßentyp ks und ein Klassifikator 26 für den Fahrstil des Fahrers kf. Diese Klassifikatoren sind als Fuzzy-Rechner ausgebildet, wie sie z.B. in der Patentanmeldung EP-A 0 638 742 beschrieben sind.

Die Klassifikations- oder Klassifikator-Signale werden in Form von Ziffern ausgegeben, deren Werte folgende Bedeutung haben:

| kr-Wert | Bedeutung |
|---|---|
| 1 | hoher Kraftschluß |
| 2 | mittlerer Kraftschluß |
| 3 | geringer Kraftschluß |

| ks-Wert | Bedeutung |
|---|---|
| 1 | Stadt |
| 2 | Landstraße |
| 3 | Autobahn |

| kf-Wert | Bedeutung |
|---|---|
| 1 | sportlicher Fahrer |
| 2 | medium Fahrer |
| 3 | ökonomischer Fahrer |

Falls das Kraftfahrzeug mit einer Getriebesteuerung versehen ist, wie sie in der genannten Patentanmeldung beschrieben ist, können die Klassifikationssignale von der Getriebesteuerung übernommen werden. Die Klassifikation des Radkraftschlußbeiwerts oder Reibungskoeffizienten Rad-Straße kann auch durchgeführt werden, wie es in der Patentanmeldung EP-A 0 630 786 beschrieben ist.

In dem Regler 18 wird abhängig einerseits von dem Drehmoment M_{Sensor} und andererseits von mindestens einem dieser Klassifikatorswerte ein Lenkmoment-Sollwert für die Servolenkung 8 berechnet und in Form des Sollstromes I_{Motor} an den Motor 9 übermittelt.

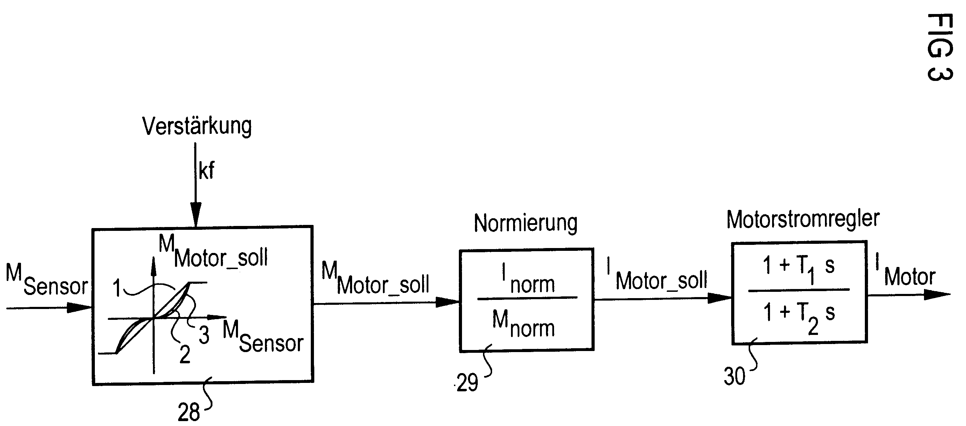

Einzelheiten der Struktur des Reglers 18 sind aus Figur 3 ersichtlich. Das von dem Sensor 13 gemessene Drehmoment an der Lenksäule Mₛₑₙₛₒᵣ wird in einer ersten Stufe 28 einer Verstärkung unterzogen. Die als Diagramm dargestellten Verstärkungskennlinien sind abhängig vom Sensormoment und von dem Klassifikatorwert kf für den Fahrstil in einem Kennfeld abgelegt. Ein z.B. als sportlich klassifizierter Fahrer (kf = 1) wird von der Servolenkung 8 stärker unterstützt als ein ökonomischer Fahrer.

Das in der ersten Stufe ermittelte Motorsollmoment *M*_{*Motor_soll*} wird in einer zweiten Stufe 28 mit einem Normierungsfaktor für den Motorstrom *I*_{*norm*} und einem Normierungsfaktor für das Motormoment *M*_{*norm*} in einen Motorsollstrom I_{Motor_soll} umgerechnet.

In einer dritten Stufe 30, die den Regler im engeren Sinne darstellt, welcher hier als PDT-Regler ausgebildet ist, wird der Motorstrom I_{Motor} ermittelt und als Stellgröße an den Motor 9 ausgegeben. Dabei erfolgt die Berechnung nach der in Figur 3 dargestellten Formel, wobei T₁ eine erste Reglerzeitkonstante und T2 eine zweite Reglerzeitkonstante ist.

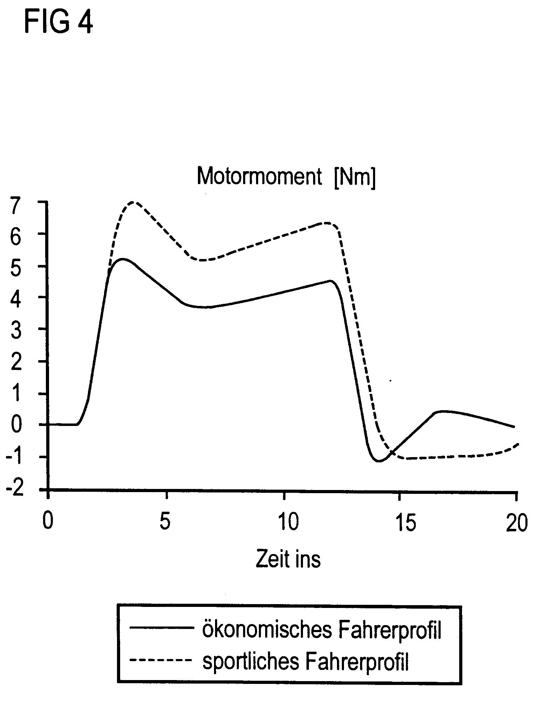

In dem Diagramm von Figur 4 ist das von der Servolenkung 8 gelieferte Motor- oder Servodrehmoment M_{Motor} in Nm über der Zeit dargestellt, und zwar für einen als ökonomisch klassifizierten Fahrer und für einen als sportlich klassifizierten Fahrer. Es ist deutlich erkennbar, daß letzterer mit mehr Drehmoment an der Lenkung unterstützt wird.

## Patentansprüche

1. Servolenkeinrichtung für ein Kraftfahrzeug, die einen elektrischen Motor (9), einen Lenkmomentsensor (13) und eine Steuerung (14) aufweist, durch welche abhängig von dem Lenkmoment ein Solldrehmoment berechnet und als Steuersignal an den Motor (9) übermittelt wird, **dadurch gekennzeichnet,**
- daß in einer Klassifikationsschaltung (24, 25, 26) Betriebsgrößen des Kraftfahrzeugs charakterisierende Klassifikationssignale (kr, ks, kf) erzeugt werden, von denen eines einen radselektiven Reifenreibwert charakterisiert, und
- daß diese Klassifikationssignale (kr, ks, kf) einem Regler (18) zugeführt und von diesem bei der Regelung des Solldrehmoments berücksichtigt werden.

2. Servolenkeinrichtung nach Anspruch 1, dadurch gekennzeichnet, daß durch den Regler (18) der dem Motor (9) zugeführte Strom (I_{Motor}) geregelt wird

3. Servolenkeinrichtung nach einem der vorhergehenden Ansprüche, dadurch gekennzeichnet, daß von der Klassifikationsschaltung (25) ein den aktuellen Straßentyp charakterisierendes Klassifikationssignal (ks) an den Regler (18) übermittelt wird.

4. Servolenkeinrichtung nach einem der vorhergehenden Ansprüche, dadurch gekennzeichnet, daß von der Klassifikationsschaltung (26) ein den Fahrstil des Fahrers charakterisierendes Klassifikationssignal (kf) an den Regler (18) übermittelt wird.
